# EUROPEAN PATENT SPECIFICATION

(11) **EP 1 650 928 B1**
(45) Date of publication and mention of the grant of the patent: **05.12.2007**
(21) Application number: 05113042.5
(22) Date of filing: 07.06.2000
(51) Int. Cl.: H04L 29/06, H04L 12/66, H04M 7/00

(54) **Method for interworking between internet protocol (IP) telephony protocols**
Vefahren zur Zusammenarbeit unterschiedlicher IP Telefon-Protokolle
Procédé d'interfonctionnement entre protocoles téléphoniques IP

(30) Priority: 07.06.1999 US 137867 P; 18.02.2000 US 506945
(43) Date of publication of application: 26.04.2006
(62) Divisional of application: 00937131.1
(73) Proprietor: Nortel Networks Limited, St Laurent, Québec H4S 2A9 (CA)
(72) Inventor: Ress, David, P., NC 27511, Cary (US); Li, Xuewen, NC 27513, Cary (US); Ingram, Denise, J, NC 27560, Morrisville (US); Utas, Gergory, Robert, TX 75063, Irving (US)
(74) Representative: Loven, Keith James

(56) References cited:
- TBD WG HENRY SINNREICH ET AL: "Service Requirements for Internet Telephony Signaling and Device Control Protocols" IETF STANDARD-WORKING-DRAFT, INTERNET ENGINEERING TASK FORCE, IETF, CH, November 1998 (1998-11), XP015035437 ISSN: 0000-0004
- SCHULZRINNE H ET AL: "Signaling for Internet telephony" NETWORK PROTOCOLS, 1998. PROCEEDINGS. SIXTH INTERNATIONAL CONFERENCE ON AUSTIN, TX, USA 13-16 OCT. 1998, LOS ALAMITOS, CA, USA,IEEE COMPUT. SOC, US, 13 October 1998 (1998-10-13), pages 298-307, XP010309377 ISBN: 0-8186-8988-9
- ROSENBERG J ET AL: "PROGRAMMING INTERNET TELEPHONY SERVICES" IEEE NETWORK, IEEE SERVICE CENTER, NEW YORK, NY, US, vol. 13, no. 3, May 1999 (1999-05), pages 42-49, XP000870630 ISSN: 0890-8044

## Description

### Priority Application

This Application claims the benefit of U.S. Provisional Patent Application Serial No. 60/137,867 filed June 7, 1999.

### Technical Field

The present invention relates to a method and an apparatus for interworking between communications protocols. More particularly, the present invention relates to a method and an apparatus for interworking between internet protocol (IP) telephony protocols.

### Background Art

There are a variety of known protocols for establishing media stream communications, such as voice, data, video, or combinations thereof, over an IP network. Protocols for establishing media stream communications over an IP network are referred to herein as IP telephony protocols. One example of an IP telephony protocol is the media gateway control protocol (MGCP). MGCP defines signals and events by which a software entity, known as a media gateway (MG), is controlled by another software entity, known as a media gateway controller (MGC), in a packet network. The media gateway controller processes call control signaling from one or more signaling gateways (SGs) and utilizes MGCP media control signaling to establish media streams between MGs. An MGC that processes call control signaling in this manner is also referred to as a call agent. The terms media gateway controller and call agent are used interchangeably herein. The media gateway controller performs call control functions, such as translations, resource management, media capabilities negotiation and selection, and media stream management. It can also provide additional services.

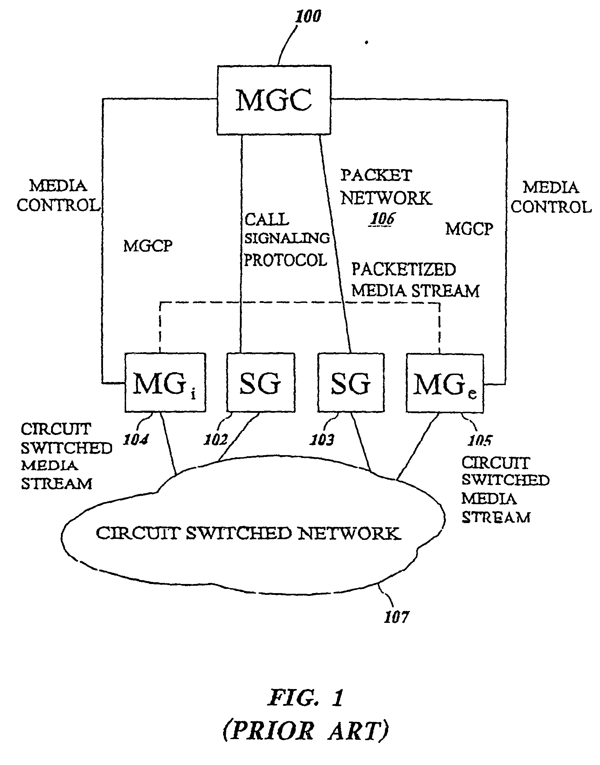

Figure 1 illustrates conventional communications using MGCP. In Figure 1, MGC **100** receives call signaling information from SGs **102** and **103** and controls MGs **104** and **105** to establish packetized media stream communications between end users in packet network **106.** For example, SG **102** and MG **104** can be associated with a calling party end user device for a given media stream communication. Similarly, SG **103** and MG **105** can be associated with a called party end user device for a given media stream communication. MGC **100** can control MGs **104** and **105** to establish media stream communications between the called and calling end user devices, such as PSTN terminals.

A detailed explanation of MGCP is found in Media Gateway Control Protocol (MGCP), Version 0.1 Draft, Internet Engineering Task Force, February 21, 1999.

Another example of an IP telephony protocol is International Telecommunications Union (ITU) Recommendation H.323. H.323 defines a protocol by which endpoints, such as gateways, terminals, or multipoint control units MCUs), can place calls in a packet network. A gateway translates between circuit-switched and packet-switched communication protocols. A terminal is a device, such as an IP terminal, that provides end user access to a network. An MCU is a device that supports conferences between three or more endpoints. H.323 defines a gatekeeper as an entity that provides address translation and controls access to the packet network for H.323 endpoints. The gatekeeper can also provide additional services, such as call control and supplementary services.

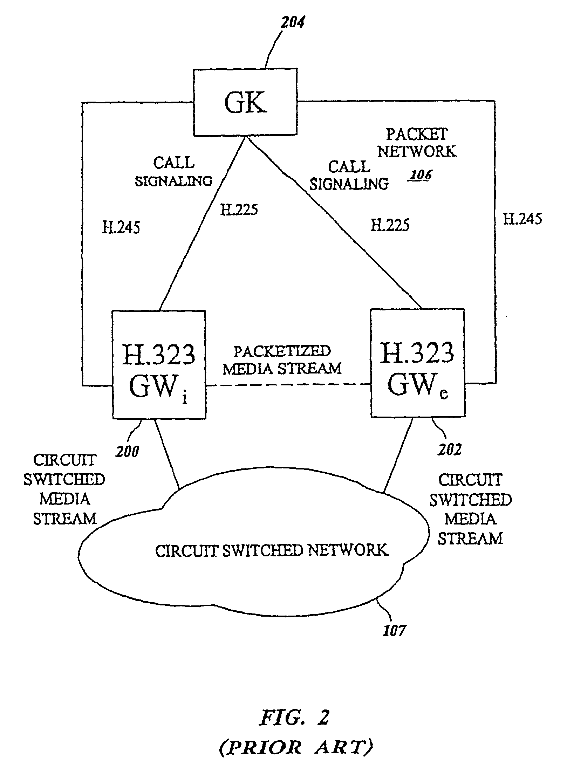

Figure 2 illustrates an example of conventional H.323 communications. In Figure 2, a first gateway **200** can be associated with a calling end user device and a second gateway **202** can be associated with a called end user device for a given media communication. Gatekeeper **204** performs call signaling functions, such as call setup and teardown, to establish calls between end user devices associated with gateways **200** and **202.** The end user devices can be PTSN terminals connected to gateway **200.** Alternatively, gateway **200** can be omitted and replaced by H.323 terminals or H.323 MCUs. Once gatekeeper **204** performs the call signaling functions necessary to set up a call, the media stream for the call flows between gateways **200** and **202.** Detailed information relating to H.323 can be found in ITU Recommendation H.323, Packet Based Multimedia Communications Systems, February 1998.

Yet another IP telephony protocol is ITU Recommendation H.248. The Internet Engineering Task Force (IETF) formed the MEGACO Group to evolve the MGCP protocol. As the MEGACO Group matured the protocol, the MEGACO Group allied itself with the ITU, and the specification developed by the MEGACO Group has become known as ITU Recommendation H.248. Thus, ITU recommendation H.248 can be viewed similarly to MGCP.

Another IP telephony protocol is the session initiation protocol (SIP). SIP is an application layer signaling protocol for creating, modifying, and terminating sessions between one or more participants. The sessions include internet multimedia conferences, internet telephone calls, and multimedia distribution. SIP originated from Columbia University and is gaining acceptance as a protocol for exchanging call signaling information over a packet network. A detailed description of SIP can be found in Request for Comments (RFC) 2543 SIP: Session Initiation Protocol, March 1999 and in Henning Schulzrinne et al. "Signaling for Internet Telephony" NETWORK PROTOCOLS, 1998. PROCEDINGS, SIXTH INTERNATIONAL CONFERENCE, AUSTIN, TX, USA, IEEE COMPUT. SOC, US, 13 October 1998, pages 298 - 307..

In addition to the published protocols described above, many vendors of telecommunications equipment and services are supporting IP telephony applications via proprietary protocols.

All of the IP telephony protocols described above are being implemented by various vendors. However, standards for interworking equipment that communicates using one protocol with equipment that communicates using another protocol are immature, nonexistent, or focus only on a specific type of application. Accordingly, there exists a long-felt need for a novel method and apparatus for interworking between IP telephony protocols.

Henry Sinnreich et al.; "Service Requirements for Internet Telephony Signaling and Device Control Protocols" IETF STANDARD-WORKING-DRAFT, INTERNET ENGINEERING TASK FORCE, IETF, CH, November 1998 (1998-11) discusses the requirements for telephony signaling and device control over the Internet from the perspective of meeting the needs of Internet service providers (ISPs) and telecom carriers wishing to provide Internet services that include telephony. The paper includes an option to map telephony protocol data (of which there are many varieties) to some sort of meta-data description (such as an XML DTD for telephony network protocol data), which would provide the basis for translations and then carry this data description in a protocol over this Internet.

### Disclosure of the Invention

The present invention provides a novel method and apparatus for interworking between IP telephony protocols. Although most of the examples described below relate to MGCP and H.323, it is understood that the method and apparatus described herein are applicable to any IP telephony protocol.

Many of the protocols described herein define an entity that is responsible for performing functions and requests on behalf of a telephony device. Typically, these functions and requests include translations, media capabilities exchange, and other services. The entities that perform the functions can be logical, physical, or both. For example, in MGCP, the MGC or call agent performs call signaling functions on behalf of a gateway. In H.323, the gatekeeper performs call signaling functions for an H.323 gateway. In SIP, a proxy server performs call signaling functions for an end user. In order to facilitate a description of the present invention, the term call server is used herein to refer to an entity that performs call signaling functions, such as translations and media capabilities exchange, on behalf of an end user device, gateway, or other entity.

According to the present invention, there is provided a method for tunneling messages between protocol agents, the method comprising receiving, from a first telephony device, a first message formatted according to a first IP telephony protocol, (a) determining whether a parameter in the first message maps to a second protocol; and (b) in response to determining that the parameter in the first message maps to the second protocol, formulating a second message formatted according to the second protocol, characterized by: (c) in response to determining that the parameter in the first message partially maps to the second protocol, formulating a multiprotocol message, the multiprotocol message including the first message formatted according to the first IP telephony protocol and a third message formatted to the second protocol.

According to a first aspect, the present invention includes a call server including a first protocol agent and a second protocol agent. The first protocol agent communicates with a first protocol device according to a first protocol. The second protocol agent communicates with a second protocol device according to a second protocol. An interworking agent provides functions usable by the first and second protocol agents to communicate using a third protocol. The third protocol provides a superset of the functions provided by the first and second protocols.

Accordingly, it is an object of the present invention to provide a novel method and apparatus for interworking between IP telephony protocols.

An object of the invention having been stated hereinabove, and which is achieved in whole or in part by the present invention, other objects will be evident as the description proceeds, when taken in connection with the accompanying drawings as best described hereinbelow.

### Brief Description of the Drawings

A description of the present invention will now proceed with reference to the accompanying drawing of which:
Figure 1 is a block diagram illustrating conventional MGCP network entities;
Figure 2 is a block diagram illustrating conventional H.323 network entities;
Figure 3 is a block diagram illustrating media gateway controller and gatekeeper functions implemented within a call server according to an embodiment of the present invention;
Figure 4 is a block diagram illustrating a call server wherein each call half is represented by an agent according to an embodiment of the present invention;
Figure 5 is a block diagram illustrating a call server including a plurality of interworking agents according to an embodiment of the present invention;
Figure 6 is a block diagram illustrating protocol agents implementing originating and terminating call half functions executing on different machines wherein an interworking agent is associated with each protocol agent;
Figure 7 is a block diagram illustrating a call server including MGCP, interworking, and H.323 agents for interworking MGCP and H.323 entities according to an embodiment of the present invention;
Figure 8 is a block diagram illustrating a connection information parameter data structure according to an embodiment of the present invention;
Figures 9(a) and 9(b) are flow charts illustrating message tunneling according to an embodiment of the present invention;
Figure 10 is a block diagram illustrating exemplary agent interworking protocol message structures according to an embodiment of the present invention;
Figure 11 is a block diagram illustrating an exemplary data structure for a digit information parameter according to an embodiment of the present invention;
Figure 12 is a call flow diagram illustrating exemplary call signaling for H.323 fast start to MGCP communications according to an embodiment of the present invention;
Figure 13 is a call flow diagram illustrating H.323 non-fast-start to MGCP communications according to an embodiment of the present invention;
Figure 14 is a call flow diagram illustrating exemplary call signaling for a hold scenario between H.323 and North American Q.931 endpoints according to an embodiment of the present invention;
Figure 15 is a call flow diagram illustrating exemplary call signaling for a retrieve scenario between H.323 and North American Q.931 endpoints according to an embodiment of the present invention;
Figure 16 is a call flow diagram illustrating exemplary call signaling for a hold scenario between H.323 and MGCP endpoints according to an embodiment of the present invention;
Figure 17 is a call flow diagram illustrating exemplary call signaling for a retrieve scenario between H.323 and MGCP endpoints according to an embodiment of the present invention;
Figure 18 is a call flow diagram illustrating exemplary call signaling between H.323 and MGCP endpoints for common channel signaling according to an embodiment of the present invention; and
Figure 19 is a call flow diagram illustrating exemplary call signaling between an MGCP gateway and an H.323 gateway according to an embodiment of the present invention.

### Detailed Description of the Invention

The present invention provides a novel method and apparatus for interworking between IP telephony protocols. In order to provide this interworking, a call server includes agents that communicate with other entities according to the protocols implemented by the other entities. However, the protocol agents communicate with each other utilizing a protocol-independent agent interworking protocol (AIP). As a result, network entities that implement different protocols can seamlessly communicate with each other.

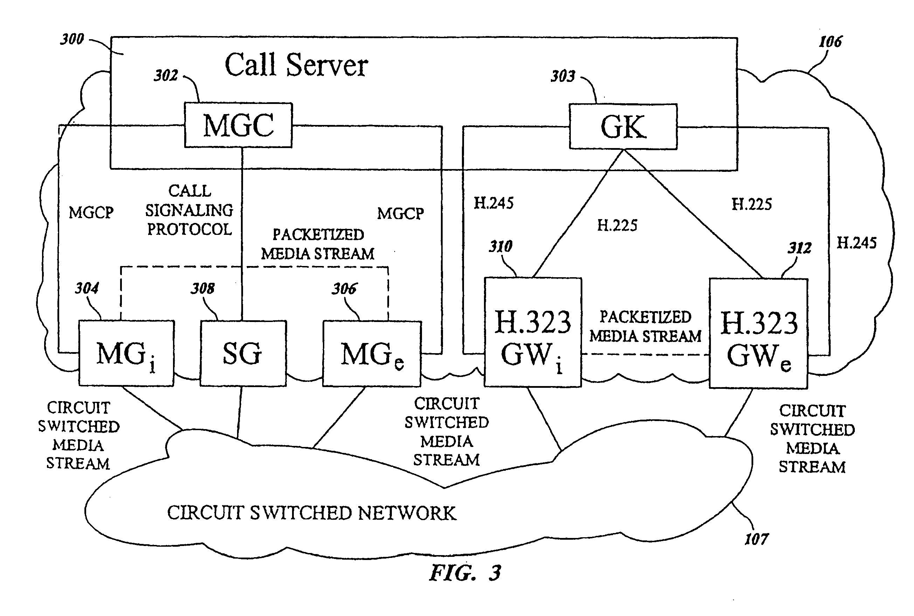

Figure 3 illustrates a call server including MGC and GK functions according to an embodiment of the present invention. In Figure 3, a call server **300** includes an MGC function **302** and a GK function **303.** The call server is a software entity that can execute on a single machine or on multiple machines. MGs and SGs recognize call server **300** as an MGC. H.323 endpoints, such as gateways, recognize call server **300** as a GK. For example, in the illustrated embodiment, ingress MG **304,** egress MG **306,** and SG **308** recognize call server **300** as an MGC. Similarly, ingress H.323 gateway **310** and egress H.323 gateway **312** recognize call server **300** as a gatekeeper.

In order for MGs **304** and **306** to recognize call server **300** as an MGC, MGC function **302** in call server **300** is adapted to communicate with MGs **304** and **306** using MGCP. Similarly, in order for SG **308** to recognize call server **300** as an MGC, MGC function **302** in call server **300** communicates with SG **308** using a call signaling protocol, such as ISDN Part (ISUP). In order for H.323 gateways **310** and **312** to recognize call server **300** as a gatekeeper, gatekeeper function **303** in call server **300** communicates with gateways **310** and **312** according to ITU Recommendations H.225 and H.245.

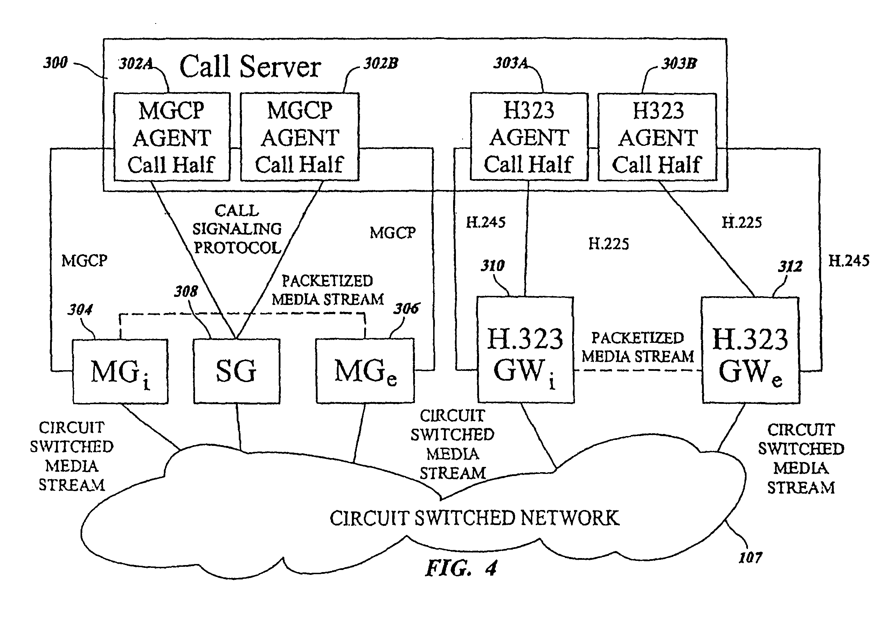

Figure 4 illustrates an embodiment of call server **300** in which the call processing functions illustrated in Figure 3 are separated into call agents, each of which performs call half functions. As used herein, call half functions refer to functions associated with either the originating or terminating side of a call. For example, in Figure 4, MGCP function **302** illustrated in Figure 3 is divided into MGCP agent **302A** and MGCP agent **302B.** Similarly, H.323 function **303** illustrated in Figure 3 is divided into H.323 agent **303A** and H.323 agent **303B.** MGCP agent **302A** and H.323 agent **303A** can perform call originating functions, such as collection of digits and translations. MGCP agent **302B** and H.323 agent **303B** can perform call terminating functions, such as trunk selection and alerting the called party of an incoming call. The functions performed by each call half will be explained in detail below with reference to call flow diagrams.

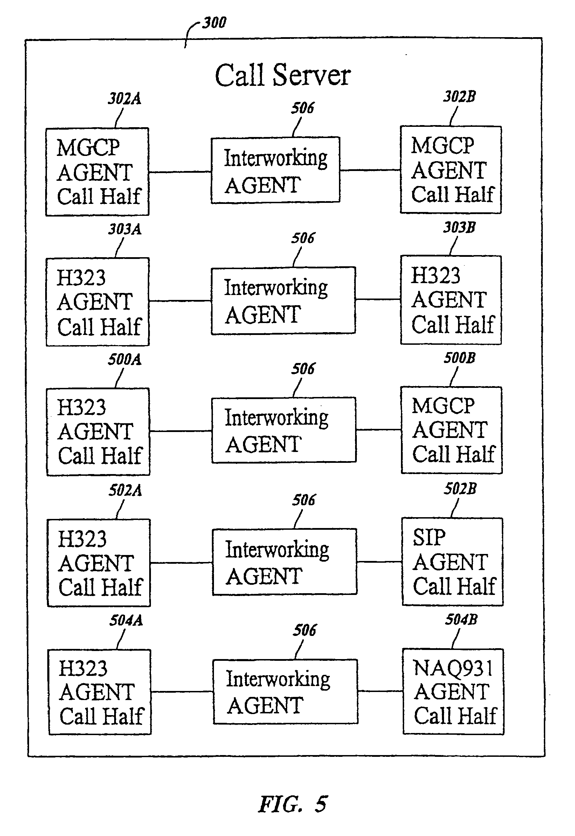

As mentioned above, the present invention is not limited to interworking between MGCP and H.323 entities. For example, Figure 5 illustrates a call server including protocol agents configured to communicate with other agents using a variety of different protocols. In the illustrated embodiment, call server **300** includes MGCP agents **302A** and **302B** for processing MGCP to MGCP calls, H.323 agents **303A** and **303B** for processing H.323 to H323 calls, H.323 agent **500A** and MGCP agent **500B** for processing H.323 to MGCP calls, H.323 agent **502A** and SIP agent **502B** for processing H.323 to SIP calls, and H.323 agent **504A** and NAQ.931 agents **504B** for processing H.323 to NAQ.931 calls. In addition, to the protocol agents, call server **300** also includes an interworking agent **506** which facilitates communication between protocol agents. More particularly, interworking agent **506** includes methods for getting and setting AIP parameters, building AIP messages, and establishing and maintaining connections, such as TCP or reliable UDP connections, between protocol agents. Interworking agents can also identify AIP message types, which will be described in more detail below. Thus, as illustrated in Figure 5, interworking agent **506** provides functions usable by a variety of different protocol agents to provide seamless interworking between the protocol agents.

In a preferred embodiment of the invention, the interworking agent is divided into separate software components, one component associated with the protocol agent for each call half. The division of the interworking agent into two software components allows protocol agents associated with a given call to execute on separate machines.

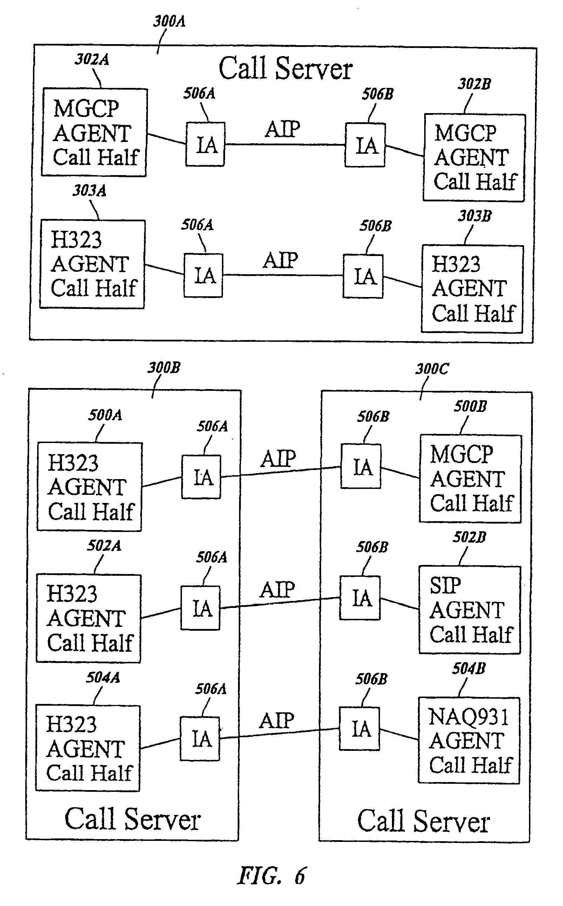

Referring to Figure 6, call server **300** illustrated in Figure 5 is divided into call servers **300A, 300B,** and **300C,** which can execute on the same machine or on different machines. Call server **300A** includes protocol agents that perform both originating and terminating call half functions. Call servers **300B** and **300C** each include protocol agents that perform only originating or terminating call half functions. This division of call processing functionality is enabled by interworking agents components **506A** and **506B,** which enable protocol agents to communicate with each other using AIP messaging. Exemplary information that can be exchanged using AIP messaging includes information regarding call progress, media capabilities and addresses, supplementary services, etc. By allowing the protocol agents to reside on separate machines, the interworking agents according to embodiments of the present invention allow efficient division of call processing functions.

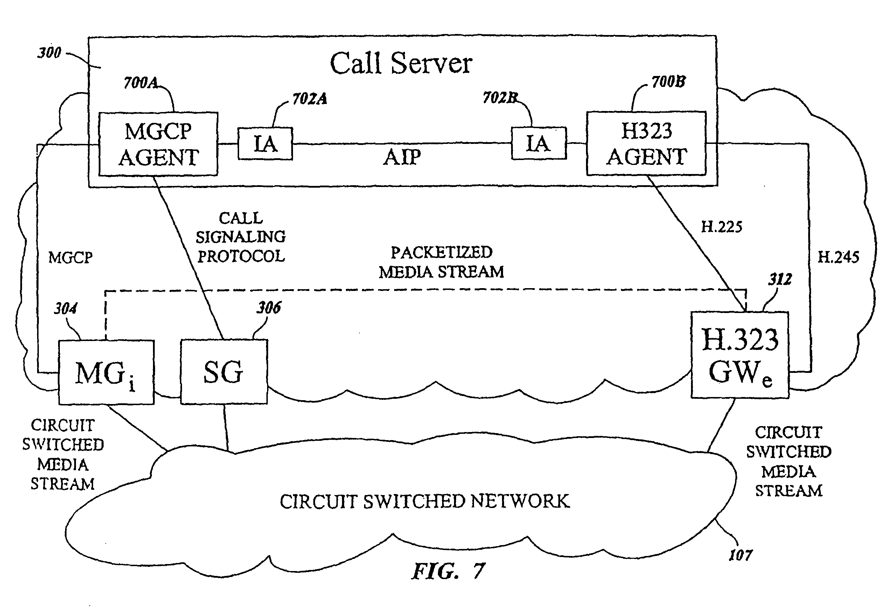

Figure 7 illustrates an example of an MGCP-H.323 network typology wherein communication between MGCP and H.323 endpoints occurs through a call server according to an embodiment of the present invention. In Figure 7, call server **300** includes MGCP agent **700A** for performing originating call half functions according to the media gateway control protocol and H.323 agent **700B** for performing terminating call half functions according to the H.323 protocol. More particularly, MGCP agent **700A** communicates with ingress media gateway **304** according to the media gateway control protocol and with signaling gateway **306** according to a call signaling protocol, such as ISUP. H.323 agent **700B** communicates with H.323 gateway **312** according to H.225 and H.245 protocols. MGCP agent **700A** and H.323 agent **700B** communicate with each other using AIP messaging. Interworking agent components **702A** and **702B** provide the functions that protocol agents **700A** and **700B** use to formulate and process AIP messages.

Because the interworking agent components **702A** and **702B** provide functions for converting messages to and from a protocol independent format, MGCP agent **700A** and the H.323 agent **700B** need not be aware of each other's protocol. Similarly, MG **304** and SG **306** need not be aware of the protocol of H.323 gateway **312,** and H.323 gateway **312** need not be aware of the protocol of MG **304** and SG **306.**

### Agent Interworking Protocol

As stated above, interworking agents according to embodiments of the present invention communicate with each other according to a protocol independent format referred to as the agent interworking protocol. The agent interworking protocol is preferably capable of representing a reasonable superset of the messaging capabilities of all protocols to be supported within the packet network. Designing an interworking protocol that supports all of the capabilities of all of the supported protocols is an unnecessarily burdensome task since some capabilities are rarely used or are only useful when communicating between devices that support the particular protocol. In addition, these rarely used capabilities can be communicated between agents that support these capabilities using tunneling, as will be described in more detail below. Accordingly, it is desirable that the agent interworking protocol provide a reasonable superset of the capabilities of supported protocols.

Rather than designing an entirely new protocol for use as the agent interworking protocol, it is more desirable to select an existing protocol that comes close to meeting the superset definition described above and extending that protocol. Existing protocols that could be used as the base protocol for the agent interworking protocol include Q.931, ISUP, and SIP. The agent interworking protocol implemented in interworking agents according to preferred embodiments of the present invention is based upon ISUP. For example, AIP includes traditional ISUP messages such as initial address messages (IAM), answer messages (ANM), and release messages (REL). The agent interworking protocol extends the base protocol to include additional procedures and signaling required to meet interoperability requirements. The functions and data structures used in the agent interworking protocol to meet these requirements will now be discussed in more detail.

One function that must be provided by the agent interworking protocol is a method for exchanging media capabilities between protocol agents. Each of the agent protocols to be interworked provide some means by which a telephony device can make known the media capabilities that it supports. These capabilities must be exchanged between two devices that desire to participate in a media stream communication in order to select a mutually compatible media session definition.

### Capabilities Exchange Between H.323 Devices

H.323 allows an endpoint to advertise its capabilities at two different times - during call establishment and after call establishment. For example, some H.323 devices support fast start capabilities which allow a partial list of media capabilities to be exchanged in H.225 call establishment messages. This method of exchanging capabilities allows faster establishment of a media stream between endpoints because capabilities are exchanged during call signaling, rather than waiting until after call signaling has been completed. In order to exchange capabilities after call establishment, H.323 compliant devices use H.245 signaling to provide a full description of all media capabilities supported.

### Capabilities Exchange Between MGCP and SIP Devices

MGCP and SIP support the use of the session description protocol (SDP) for encoding the capabilities supported by the device. The session description protocol is included in call establishment messages similarly to H.323 fast start messages. For example, a SIP call establishment message, such as an INVITE message, includes an SDP portion in the body of the message. The SDP portion includes the capabilities supported by the endpoint, such as encoding and decoding algorithms, type of media stream, etc.

Because these capabilities can be exchanged during call setup or after call establishment, the agent interworking protocol implemented in call servers according to embodiments of the present invention is preferably flexible enough to support capabilities exchange at either time. In addition, because each of the above-mentioned protocols uses different syntax for specifying the capability's definition, AIP preferably provides a normalized syntax to which interworking agents can map the capability's definitions.

### Media Management

In addition to providing a method for exchanging media capabilities, the agent interworking protocol preferably also provides media management capabilities that include a reasonable superset of the media management capabilities of supported protocols. For example, each of the agent protocols provide support for establishing and altering media streams; however, the specific protocols vary significantly. H.323 fast start procedures allow H.323 devices to establish a media stream in concert with call establishment. However, fast start is optional and might not be supported by a given H.323 device. H.245 procedures allow H.323 devices to open and close media channels post call establishment. H.323 is very limited in its ability to alter a media stream once established. H.323 media streams can be unidirectional or bi-directional. Voice/audio media is typically represented via two independent unidirectional streams on IP networks with bi-directional media being typically used for data or for voice on ATM networks.

MGCP supports establishment of media streams during call establishment similar to H.323 fast start procedures. Media streams can be either unidirectional or bi-directional and can be changed from one format to the other at any time during a call. MGCP allows media channels to be modified in a variety of ways without having to be closed. For example, a media stream can be redirected by changing the receiving real time protocol (RTP) address. The encoding format can be changed by changing the codec. The mode can be changed to send only, send receive, receive only, or inactive. SIP is similar to MGCP in its ability to modify media streams.

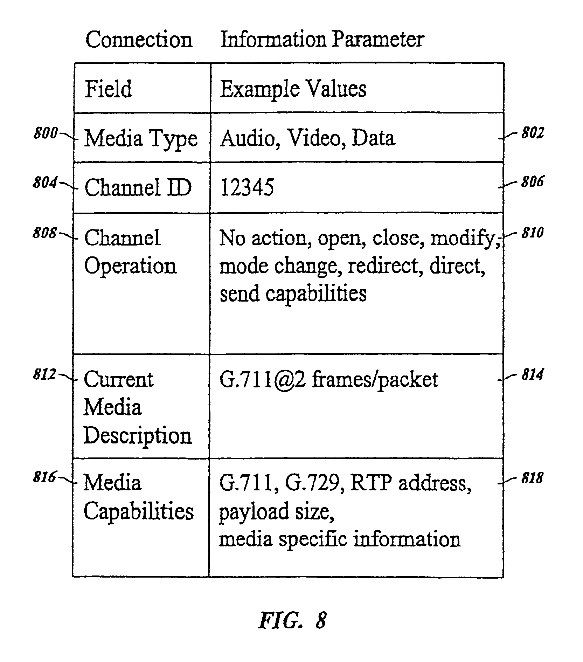

In order to provide an interworking solution that accommodates these agent protocols, three design objectives are preferably met. The first design objective is that the agent interworking protocols must provide sufficient flexibility to meet the requirements of all agent protocols. Second, the agent design preferably maps between agent specific and AIP procedures and syntax for media management. The third objective is that a flexible control framework is preferably implemented that allows the agent to easily react to media changes made by the agent implementing the other call half. The connection information parameter illustrated in Figure 8 is the mechanism provided by the agent interworking protocol for implementing media management functions and exchanging media capabilities. The times for exchanging media capabilities and performing media management functions according to the agent interworking protocol will be described in more detail below with respect to the call flow diagrams.

Figure 8 is a table illustrating exemplary fields and field values for the connection information parameter according to an embodiment of the present invention. In Figure 8, the left hand column represents the fields in the connection information parameter data structure. The right hand column represents example values for each of the fields in the left hand column. In the illustrated embodiment, the connection information parameter includes a media type field **800** that holds a media type value **802** for specifying the type of media being exchanged or sought to be exchanged in a media stream. Example values for the media type field include audio, video, and data. Channel ID field **804** includes an internally assigned channel ID value that allows an interworking agent to identify the media stream. In the illustrated embodiment, 12345 is given as an example value **806** for channel ID field **804.** Channel operation field **808** includes a channel operation value **810** for specifying the operation being performed on the media stream. Values **810** for the channel operation field **808** are preferably a superset of protocol media stream operations for the supported protocols. In the illustrated embodiment, exemplary values for the channel operation field are no action, open, close, modify, mode change, redirect, direct, and send capabilities. The no action value indicates that no change is being made to the existing media stream. The open value specifies that a media stream is sought to be opened. The close value indicates that an open media stream is sought to be closed. The modify value indicates that the media stream is sought to be modified, e.g., changing a code from G.711 to G.729a. The mode change value indicates that the mode of the media stream is sought to be changed, e.g., from send only to receive only. The redirect value indicates that the media stream is to be redirected to another endpoint. The direct value specifies the location to which the media stream is to be directed. The send capabilities value requests the receiving entity to transfer the media capabilities list.

Current media description field **812** stores current media description value **814** for indicating the description of the current media stream. In the illustrated embodiment, an example of a current media description value is G.711 at two frames per packet. Media capabilities field **816** includes media capabilities value or values **818** that allows an entity to exchange its media capabilities with another entity. In the illustrated example, the media capabilities field includes a list of supported formats, such as G.711, G.729. Media capabilities field **818** also includes a payload size value that specifies the size of media capabilities field. Media capabilities field **818** also includes a redefinable area in which information specific to the type of media and codes can be specified. For example, a facsimile media stream requires certain attributes that are not required for other media types. The redefinable area allows this information to be specified.

### Message Tunneling

As described above, the agent interworking protocol represents a reasonable superset of the agent protocols sufficient to achieve interworking. However, the agent interworking protocol is not a complete superset of the supported protocols. That is, certain agent protocols can contain messages or parameters which do not map to any other agent protocols, but provide added value for a call between two devices of the same type. In this case, the agent interworking protocol preferably supports tunneling of the native protocol message. As used herein, tunneling refers to transferring the native protocol message from one protocol agent to another protocol agent without converting to and from the agent interworking protocol. The agent receiving the native protocol message can inspect the message, and if the agent understands the message, process the message accordingly.

An example of when it might be desirable to tunnel a message relates to H.323. H.323 provides a sophisticated means of representing terminal capabilities in sets. The agent interworking protocol, as described herein, might not include functionality for representing terminal capabilities in sets as defined in H.323, because the other protocols do not support such capability. Another capability that H.323 supports which can not be supported by other protocols is the exchange of H.245 indications between two H.323 devices. Some of these indications have no equivalent mapping to other agent protocols. In these situations, it can be desirable to tunnel the H.323 messages from one agent to another agent.

### Method of Tunneling Messages

According to an embodiment of the present invention, interworking messages can be of three types:
- Agent interworking protocol messages - protocol-neutral messages understood by all protocol agents;
- Native protocol messages - protocol-specific messages, such as SIP, MGCP, and H.323 messages;
- Multipart messages - messages that contain multiple other messages, such as native protocol messages and AIP messages. All agents are preferably capable of extracting the AIP message and processing the message accordingly. If the multipart message contains a native protocol message, this message is preferably processed if supported.

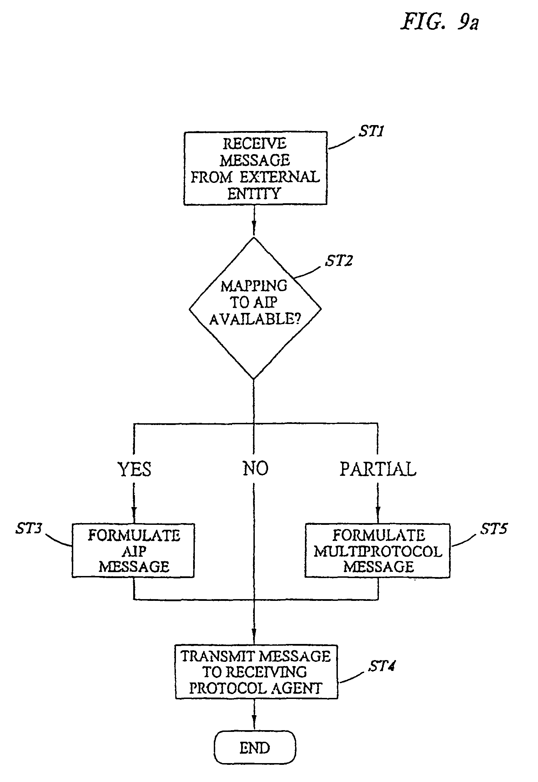

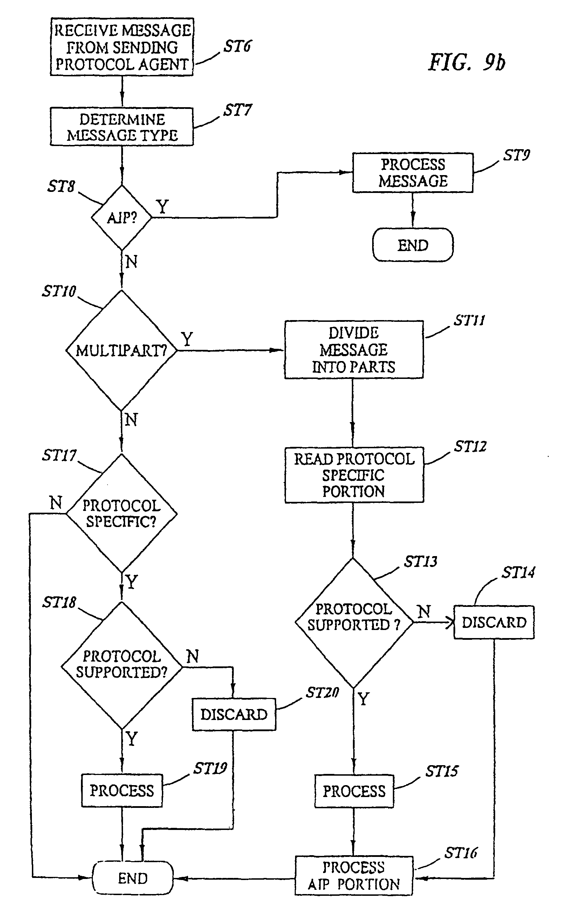

Figures 9(a) and 9(b) are flow charts illustrating exemplary formulating and processing of interworking messages by a call server according to an embodiment of the present invention. The flow chart in Figure 9(a) illustrates exemplary steps that can be performed by a sending protocol agent in formulating an interworking message using procedures provided by an associated interworking agent. The flow chart in Figure 9(b) illustrates exemplary steps that can be performed by a receiving protocol agent using procedures provided by an associated interworking agent upon receiving an interworking message. Referring to Figure 9(a), in step **ST1,** the sending protocol agent receives a message from an external entity, such as an H.323 gateway. In step **ST2,** the sending protocol agent determines whether a mapping is available to the agent interworking protocol. In step **ST3,** if a mapping is available, the sending protocol agent formulates the corresponding AIP message using functions provided by the interworking agent associated with the sending protocol agent (hereinafter, "the first interworking agent") and transmits the message to the receiving protocol agent (step **ST4**). In step **ST2,** if the sending protocol agent determines that the mapping to the agent interworking protocol is not available, the sending protocol agent simply transmits the protocol message without modification to the receiving protocol agent (step **ST4**). In step **ST2,** if the sending protocol agent determines that a mapping to AIP is partially available, the sending protocol agent can formulate a multiprotocol message including the AIP message and the native protocol message (step **ST5**). The sending protocol agent can then transmit the multiprotocol message to the receiving protocol agent (step **ST4**).

Referring to Figure 9(b), in step **ST6,** the receiving protocol agent receives the message from the sending protocol agent. In step **ST7,** receiving protocol agent determines the message type, i.e., whether the message is a protocol specific message, an agent interworking protocol message, or a multipart message, using procedures provided by its associated interworking agent (hereinafter, "the second interworking agent"). In step **ST8,** if the receiving protocol agent determines that the message is an agent interworking protocol message, the receiving protocol agent processes the message (step **ST9**). In step **ST10,** the receiving protocol agent determines whether the message is a multipart message. If the message is a multipart message, the receiving protocol agent separates the multi-protocol message into its component messages (step **ST11**). After the receiving protocol agent separates the message, the receiving protocol agent reads the protocol specific portion of the AIP message (step **ST12**). In step **ST13,** the receiving protocol agent determines whether the protocol in the protocol specific portion is supported. If the protocol is not supported, the receiving protocol agent discards the message (step **ST14**). If the protocol is supported, the receiving protocol agent processes the message (step **ST15**). In step **ST16,** the receiving protocol agent processes the AIP portion of the message.

Referring to step **ST17,** if the receiving protocol agent determines that the message is a protocol specific message, the receiving protocol agent determines whether the protocol of the message is supported (step **ST18**). If the protocol is supported, the receiving protocol agent processes the message (step **ST19**). If the protocol is not supported, the receiving protocol agent discards the message (step **ST20**).

### Transport Mechanism for Agent Interworking Messages

Interworking messages can be sent between protocol agents using any packet based protocol, for example, TCP, UDP, etc. In a preferred embodiment of the invention, interworking messages are transmitted between interworking agents using TCP over IP. As is known in the art, an IP message includes a header portion and a data portion. A TCP message is encapsulated in the data portion of the IP message. The TCP message also includes a header portion and a data portion. Interworking messages are encapsulated in the data portion of the TCP message. Interworking messages also include a header portion and a data portion. The header portion indicates the message type, i.e., AIP, protocol-specific, or multipart.

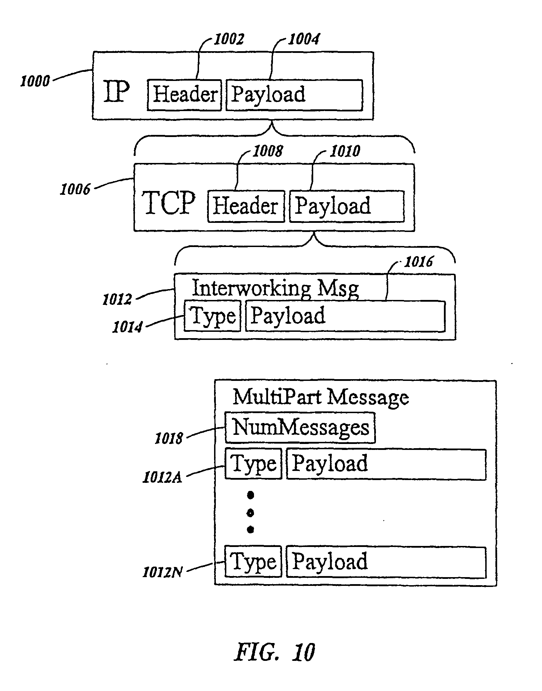

Figure 10 illustrates the relationships between IP messages, TCP messages, and interworking messages. In Figure 10, IP message **1000** includes a header portion **1002** and a data portion **1004.** TCP message **1006** is encapsulated in data portion **1004** of IP message **1000.** TCP message **1006** includes a header portion **1008** and a data portion **1010.** Interworking message **1012** is encapsulated in data portion **1010** of TCP message **1006.** Interworking message **1012** includes a header portion **1014** for indicating the message type and a data portion **1016** containing the actual message. If the header portion **1014** indicates that the interworking message is a multipart message, data portion **1016** of interworking message **1012** includes a first field **1018** indicating the number of messages present in the multipart message. After the first field, the multipart message can include one or more interworking messages **1012A** to **1012N.**

### DTMF Digit Handling

Another extension of the base protocol provided by the agent interworking protocol is dual tone multifrequency (DTMF) digit handling. Numerous studies have concluded that encoding and transporting DTMF digits within the media stream is not suitable for supporting networked services, such as credit card validation, automated services, and voice mail, which require DTMF digit recognition. Some of these services require recognition not only of the tone being transmitted but also of the duration of the tone. Algorithms for encoding voice and data can distort the tone and/or change the duration of the tone sought to be transmitted. As a result, the receiving application might not be able to correctly interpret the tone.

Currently, a fully standardized approach for handling the transport of DTMF digits after call establishment is not defined. The approach that is currently in the most favor is to encode DTMF digits as a special real time protocol (RTP) payload type that is exchanged between devices participating in the media stream. If this approach is standardized, various digital signal processor (DSP) manufacturers must comply with the standard before interworking will be accomplished. Because this involves a hardware change, much time can elapse before this occurs.

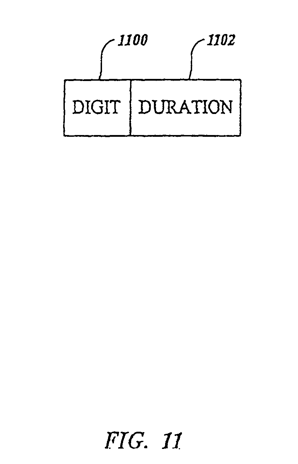

As a current solution to the problem, some of the agent protocols have implemented out-of-band techniques for handling DTMF digits. The agent interworking protocol according to embodiments of the present invention preferably provides a mapping to and from the out-of-band DTMF digit handling techniques of supported protocols. In order to provide a method for communicating DTMF information between protocol agents, the agent interworking protocol defines a data structure referred to herein as the digit information parameter. Figure 11 illustrates an exemplary digit information parameter data structure. In the illustrated embodiment, the digit information parameter data structure includes a digit field **1100** and a duration field **1102.** Digit field **1100** is capable of storing a digit value indicative of the DTMF digit being transmitted. For example, the digit field can contain a numerical value that indicates one of the keys on a telephone handset. Duration field **1102** stores a duration value for indicating the duration of the tone represented by the digit in the digit field. Specific examples of when the digit information parameter is exchanged will be explained below with reference to the call flow diagrams.

### Interworking Examples

### A. H.323 Fast Start to MGCP

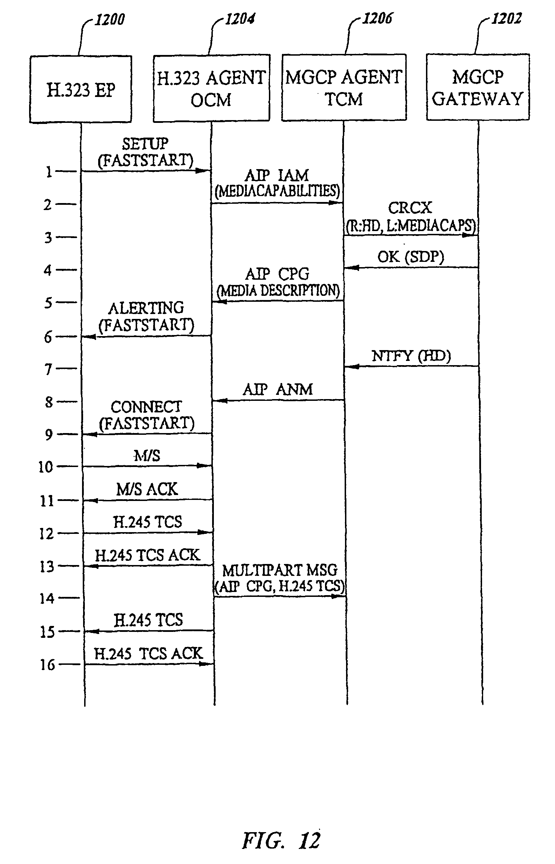

Figure 12 is a call flow diagram illustrating exemplary call signaling performed by H.323 and MGCP agents including interworking agent capabilities according to an embodiment of the present invention. In Figure 12, H.323 endpoint **1200** is seeking to establish a call with an MGCP endpoint through MGCP gateway **1202.** MGCP gateway **1202** performs both signaling gateway and media gateway functions. H.323 agent **1204** includes interworking agent functionality and implements an originating call model. MGCP agent **1206** includes interworking agent functionality and implements a terminating call model.

In line 1 of the call flow diagram, H.323 endpoint **1200** sends a SETUP message to H.323 agent **1204.** The SETUP message includes fast start parameters that specify suggested media options for the initial media stream. In line 2 of the call flow diagram H.323 agent **1204** sends an agent interworking protocol initial address message (IAM) to MGCP agent **1206.** The AIP IAM message contains the media capabilities definition mapped from the fast start parameters extracted from the SETUP message. In line 3 of the call flow diagram, MGCP agent **1206** sends an MGCP create connection (CRCX) message to MGCP gateway **1202.** The CRCX message contains local connection options that are mapped from the AIP media capabilities information extracted from the IAM message into MGCP format. In line 4 of the call flow diagram, MGCP gateway **1202** sends an OK message to MGCP agent **1206.** The OK message includes a media capability selected by MGCP gateway **1202** from the media capabilities specified in the CRCX message. The media description for the selected capability is returned in the SDP portion of the OK message.

In line 5 of the call flow diagram, MGCP agent **1206** sends an AIP call progress (CGP) message to H.323 agent **1204.** An AIP CPG message is used to signal events other than release and answer between protocol agents implementing different call halves. In the illustrated example, the CPG message includes a mapping of the SDP portion of the OK message into AIP format. In addition, any other media capabilities which the MGCP agent is capable of supporting can be included in the media description. In line 6 of the call flow diagram, H.323 agent **1204** transmits an ALERTING message to H.323 endpoint **1200.** H.323 agent **1204** maps the media description from the AIP CPG message into fast start parameters and includes the fast start parameters in the ALERTING message. Any additional capabilities that were received by the H.323 agent are stored for later usage.

In line 7 of the call flow diagram, when the MGCP end user answers the call, signaling gateway **1202** sends a NOTIFY message to MGCP agent **1206.** The NOTIFY message alerts MGCP agent **1206** of the off-hook event. In line 8 of the call flow diagram, in response to the NOTIFY message, MGCP agent **1206** transmits an AIP answer message (ANM) to H.323 agent **1204.**

In line 9 of the call flow diagram, in response to the answer message, H.323 agent **1204** transmits a CONNECT message to H.323 endpoint **1200.** In lines 10 and 11 of the call flow diagram, H.323 endpoint **1200** and H.323 agent **1204** exchange master/slave and master/slave acknowledge messages. These messages are sent according to H.245 master/slave determination. This determination is made to resolve conflicts in media formats. H.323 agent **1204** handles the exchange and does not map the exchange to the agent interworking protocol.

In line 12 of the call flow diagram, H.323 endpoint **1200** transmits an H.245 terminal capabilities set (TCS) message to H.323 agent **1204** to communicate the media capabilities of endpoint **1200** to H.323 agent **1204.** In line 13, H.323 agent **1204** acknowledges the TCS message. In line 14 of the call flow diagram, H.323 agent **1204** transmits a multipart message to MGCP agent **1206.** The multipart message includes the capabilities of the H.323 device mapped into AIP format. The capabilities are sent to MGCP agent **1206** in the AIP CPG message. Optionally, the H.245 representation of the TCS can be sent as well. In this case, a multipart message is sent between call halves. The multipart message includes both the AIP CPG message and the H.245 TCS message. Because MGC **1206** might not support H.245 TCS, MGCP agent **1206** might, i.e., if H.245 TCS is not supported, discard the TCS portion of the multipart message and process only the AIP portion.

In lines 15 and 16 of the call flow diagram, H.323 endpoint **1200** and H.323 agent **1204** exchange TCS and TCS ACK messages. In this exchange, the capabilities of the other end, i.e., of MGCP gateway **1202,** which were received and stored upon receipt of the CPG message in line 5 of the call flow diagram, are sent to H.323 endpoint **1200** as an H.245 terminal capability set.

### H.323 Non-Fast Start to MGCP

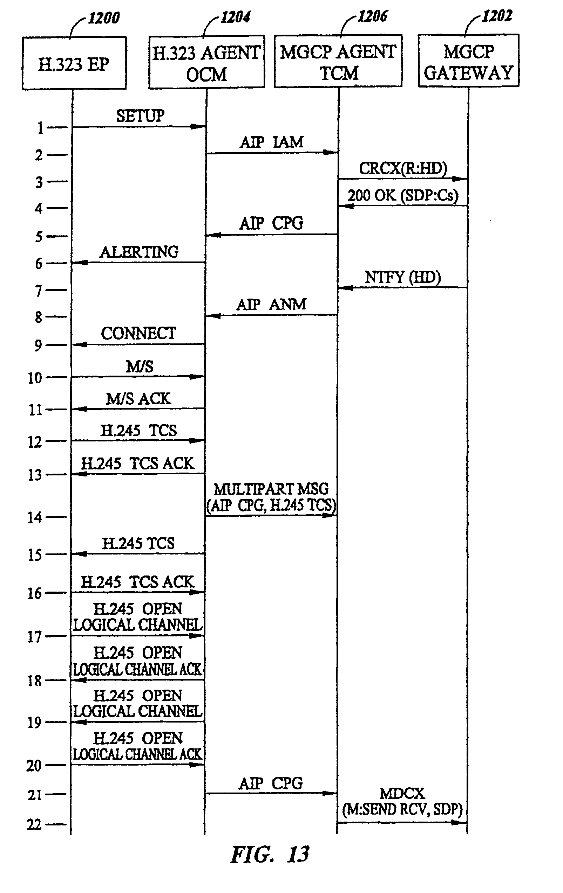

While Figure 12 illustrated H.323 to MGCP interworking for H.323 fast start procedures, Figure 13 illustrates H.323 to MGCP interworking without fast start procedures. In other words, in Figure 13, the H.323 media capabilities are not exchanged until after call establishment. The entities involved in communications in Figure 13 are the same as those illustrated in Figure 12. Thus, a description of these entities is not repeated herein.

Referring to Figure 13, in line 1 of the call flow diagram, H.323 endpoint **1200** sends a SETUP message to H.323 agent **1204.** The SETUP message does not include fast start parameters. In line 2 of the call flow diagram, H.323 agent **1204** transmits an AIP IAM message to MGCP agent **1206.** The IAM message contains no media description. In other words, the connection information parameter is either not included or set to a null value. In line 3 of the call flow diagram, MGCP agent **1206** transmits a CRCX message to MGCP gateway **1202.** The CRCX message can optionally contain a default set of media capabilities that do not reflect capabilities supported by the H.323 endpoint. A CRCX message example is as follows:
CRCX:
R: HD
L: Default media capabilities
M: Inactive (or receive only)
In the CRCX message example, the hd value in the R field instructs gateway **1202** to go off-hook. The value in the L field specifies local connection options, which indicate to gateway **1202** the media capabilities of H.323 endpoint **1200.** In response to the CRCX message, in line 4 of the call flow diagram, MGCP gateway **1202** transmits an OK message to MGCP agent **1206.** The OK message includes an SDP portion with the media description for the connection. An exemplary media description is as follows:
v=0
c=IP address
m=media description
In the exemplary media description set forth above, the IP address in the c= parameter is the IP address on MGCP gateway **1202** for receiving the media stream. The media description specified in the m= parameter includes the type of media that the media gateway is capable of receiving, e.g., voice, data, or video.

In line 5 of the call flow diagram, MGCP agent **1206** transmits an AIP call progress (CPG) message to H.323 agent **1204.** The AIP CPG message includes the connection information parameter data structure in which the media description from the SDP portion of the AIP message is mapped into AIP format. The media description is stored by H.323 agent **1204,** but is not transmitted to H.323 endpoint **1200** as a fast start parameter.

In line 6 of the call flow diagram, H.323 agent **1204** transmits an ALERTING message to H.323 endpoint **1200.** The ALERTING message notifies H.323 endpoint **1200** that the MGCP end user is being alerted. When the MGCP end user answers the call, in line 7 of the call flow diagram, MGCP gateway **1202** transmits a NOTIFY message to MGCP agent **1206.** In line 8 of the call flow diagram, MGCP agent **1206** transmits an AIP answer message (ANM) to H.323 agent **1204.** In line 9 of the call flow diagram, H.323 agent **1204** transmits a CONNECT message to H.323 endpoint **1200.** In lines 10 and 11 of the call flow diagram, the H.245 master/slave determination takes place. H.323 agent **1204** handles the exchange and does not map the exchange to the agent interworking protocol.

In lines 12 and 13 of the call flow diagram H.323 endpoint **1200** and H.323 agent **1204** exchange H.245 TCS and H.245 TCS ACK messages. This exchange communicates the media capabilities of H.323 endpoint **1200** to H.323 agent **1204.** In line 14 of the call flow diagram, H.323 agent **1204** transmits a multipart message to MGCP agent **1206.** H.323 agent **1204** maps the capabilities of H.323 endpoint **1200** into AIP format and includes these capabilities in an AIP CPG message. Optionally, the H.245 representation of the TCS can be sent as well. In this example, a multipart message is sent that includes both the AIP CPG message and the H.245 TCS message. Since MGCP agent **1206** can not support H.245 TCS, MGCP agent **1206** can only process the AIP portion of the multipart message.

In lines 15 and 16 of the call flow diagram, H.323 endpoint **1200** and H.323 agent **1204** exchange TCS and TCS ACK messages. In this exchange, the capabilities of MGCP gateway **1202,** which were received and stored upon receipt of the AIP CPG message in line 5 of the call flow diagram, are sent to H.323 endpoint **1200** as an H.245 terminal capability set. In lines 17 - 20 of the call flow diagram, H.323 endpoint **1200** and H.323 agent **1204** exchange H.245 OPEN LOGICAL CHANNEL and H.245 OPEN LOGICAL CHANNEL ACKNOWLEDGE messages. In this exchange, H.323 agent **1204** two unidirectional media streams between the end users. H.323 endpoint **1200** returns its RTP port for each media stream in the acknowledge messages.

In line 21 of the call flow diagram, H.323 agent **1204** transmits an AIP CPG message to MGCP agent **1206.** CPG message contains an updated media description to reflect the RTP address of H.323 endpoint **1200** and the mode change to send receive. In line 22 of the call flow diagram, MGCP agent **1206** transmits a modify connection message to MGCP gateway **1202.** This updates the media description at MGCP gateway **1202** and a full duplex media path between end users is complete.

### H.323 - NAQ.931 Call Hold Scenario

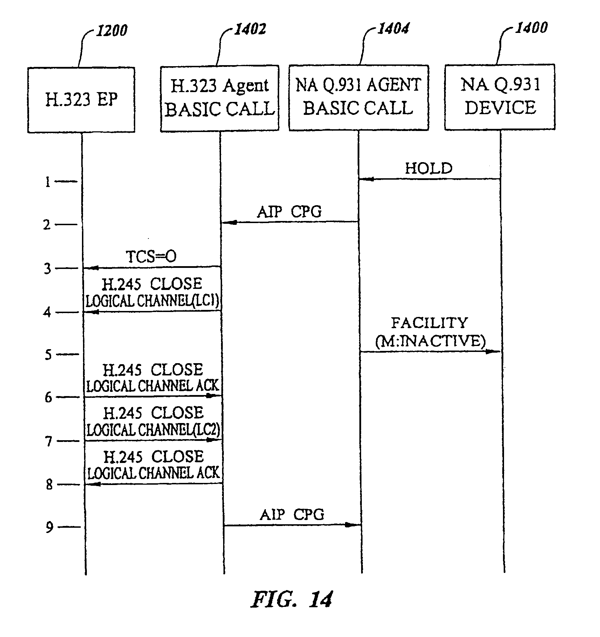

Figure 14 illustrates interworking between an H.323 endpoint and an NAQ.931 device for a call hold scenario. In Figure 14, it is assumed that a bi-directional media stream has been established between H.323 endpoint **1200** and NAQ.931 device **1400.** H.323 endpoint **1200** can be an IP terminal, as previously described with respect to Figure 12. NAQ.931 device **1400** can comprise an IP terminal. H.323 agent **1402** includes interworking agent capabilities as well as H.323 gatekeeper capabilities. Similarly, NAQ.931 agent **1404** includes interworking agent capabilities as well as NAQ.931 agent capabilities.

In line 1 of the call flow diagram, NAQ.931 device **1400** transmits a HOLD message to NAQ.931 agent **1404.** In line 2 of the call flow diagram, in response to the HOLD message, NAQ.931 agent **1404** transmits an AIP CPG message to H.323 agent **1402.** The CPG message includes the connection information parameter data structure. The channel operation field in the data structure is set to mode change, and the mode field in the data structure is set to inactive. In line 3 of the call flow diagram, H.323 agent **1402** transmits a TCS = 0 message to H.323 endpoint **1200.** In line 4 of the call flow diagram, H.323 agent **1402** transmits a CLOSE LOGICAL CHANNEL message to H.323 endpoint **1200.** The CLOSE LOGICAL CHANNEL message closes one of the two channels between H.323 endpoint **1200** and NAQ.931 device **1400.** In line 5 of the call flow diagram, NAQ.931 agent **1404** transmits a FACILITY message to NAQ.931 device **1400.** The FACILITY message indicates that inactive mode has been entered. In line 6 of the call flow diagram, H.323 endpoint **1200** transmits a CLOSE LOGICAL CHANNEL ACKNOWLEDGE message to H.323 agent **1402** acknowledging the closing of logical channel 1.

In lines 7 and 8 of the call flow diagram, H.323 endpoint **1200** and H.323 agent **1402** exchange H.245 CLOSE LOGICAL CHANNEL and CLOSE LOGICAL CHANNEL ACKNOWLEDGE messages for logical channel 2. Once logical channel 2 is closed, in line 9 of the call flow diagram H.323 agent **1402** transmits an AIP CPG message to NAQ.931 agent **1404.** The AIP CPG message includes the connection information parameter. The change operation field in the connection information parameter data structure is set to mode change, and the mode is set to inactive.

### H.323 - NAQ.931 Call Retrieve Scenario

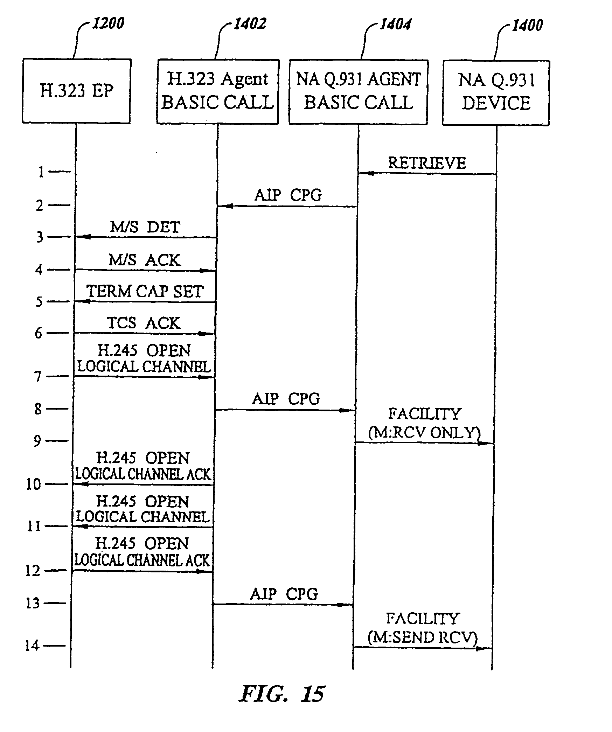

Figure 15 illustrates H.323 to NAQ.931 interworking for a call retrieve scenario. The entities illustrated in Figure 15 are the same as those illustrated in Figure 14. Hence, a description thereof is not repeated herein. In Figure 15, it is assumed that a call between H.323 endpoint **1200** and NAQ.931 device **1400** has been put on hold. Thus, the signaling that must occur between H.323 endpoint **1200** and NAQ.931 device **1400** to retrieve the call includes reopening the logical channels between H.323 endpoint **1200** and NAQ.931 device **1400.**

In line 1 of the call flow diagram illustrated in Figure 15, NAQ.931 device **1400** transmits a RETRIEVE message to NAQ.931 agent **1404.** In line 2 of the call flow diagram, NAQ.931 agent **1404** transmits an AIP CPG message to H.323 agent **1402.** The CPG message includes the connection information parameter data structure with the change operation field set to mode change and the mode set to send/receive. In lines 3 and 4 of the call flow diagram, the H.245 master/slave determination occurs between H.323 endpoint **1200** and H.323 agent **1402.** H.323 endpoint **1200** and H.323 agent **1402** must revert to a TCS exchange in order to reestablish the media streams. Accordingly, in lines 5 and 6 of the call flow diagram H.323 endpoint **1200** and H.323 agent **1402** exchange TCS and TCS ACK messages.

In line 7 of the call flow diagram H.323 endpoint **1200** transmits an H.245 OPEN LOGICAL CHANNEL to H.323 agent **1402.** In line 8 of the call flow diagram, H.323 agent **1402** transmits an AIP CPG message to NAQ.931 agent **1404.** The CPG message includes the connection information parameter data structure. The channel operation field and the data structure is set to mode change and the mode is set to send only. This reestablishes one of the media streams between H.323 endpoint **1200** and NAQ.931 device **1400.** In line 9 of the call flow diagram, NAQ.931 agent **1404** transmits a FACILITY message to NAQ.931 device **1400.** The FACILITY message includes a mode parameter that sets the channel to be receive only.

In line 10 of the call flow diagram H.323 agent **1402** transmits an OPEN LOGICAL CHANNEL ACKNOWLEDGE message to H.323 endpoint **1200** acknowledging the opening of logical channel 1. In line 11 of the call flow diagram, H.323 agent **1402** transmits an H.245 OPEN LOGICAL CHANNEL message to H.323 endpoint **1200** to open logical channel 2. In line 12 of the call flow diagram, H.323 endpoint **1200** transmits an H.245 OPEN LOGICAL CHANNEL ACKNOWLEDGE message to H.323 agent **1402.** In line 13 of the call flow diagram, H.323 agent **1402** transmits an AIP CPG message to NAQ.931 agent **1404.** The CPG message includes the connection information parameter data structure. The channel operation field in the data structure is set to mode change and the mode field is set to send/receive. In line 14 of the call flow diagram, NAQ.931 agent **1404** transmits a FACILITY message to NAQ.931 device **1400.** The FACILITY message includes a mode field that sets the mode to be send/receive. Once this message is received, both logical channels are open between H.323 endpoint **1200** and NAQ.931 device **1400.**

### H.323 - MGCP Hold Scenario

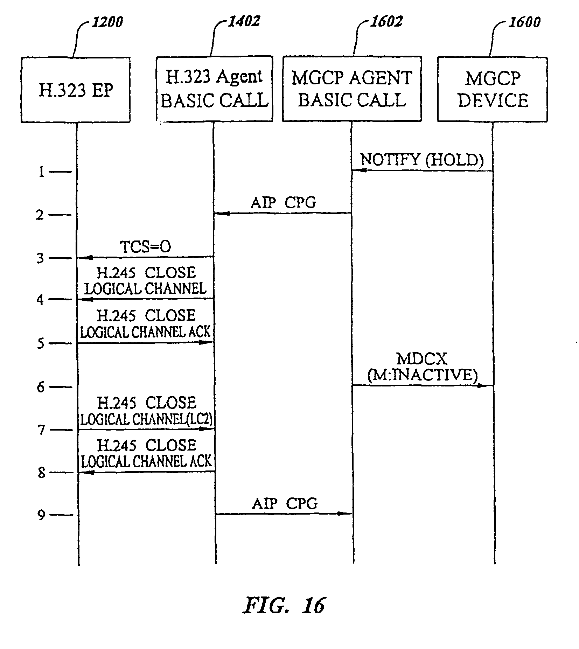

Figure 16 illustrates interworking for an H.323 - MGCP hold scenario. In Figure 16, it is assumed that a call has been established between H.323 endpoint **1200** and MGCP device **1600.** MGCP device **1600** is assumed to support an event package for call hold and retrieve events. H.323 device **1200** is the same as H.323 device **1200** described with respect to Figure 12, and hence a description thereof is not repeated herein. MGCP device **1600** can be an MGCP device, such as a media gateway. MGCP agent **1602** includes interworking agent functionality as well as MGCP media gateway controller functionality. H.323 agent **1402** is the same as H.323 agent **1402** described with respect to Figure 14, and hence a description thereof is not repeated herein.

In line 1 of the call flow diagram, MGCP device **1600** transmits a NOTIFY message to MGCP agent **1602.** The NOTIFY message includes an event that informs MGCP agent **1602** that the end user connected to MGCP device **1600** has placed the call on hold. In line 2 of the call flow diagram, MGCP agent **1602** transmits an AIP CPG message to H.323 agent **1402.** The AIP CPG message includes the connection information parameter. The channel operation field in the connection information parameter data structure is set to mode change and the mode field is set to inactive. In line 3 of the call flow diagram, H.323 agent **1402** transmits a TCS = 0 message to H.323 endpoint **1200.**

In lines 4 and 5 of the call flow diagram, H.323 endpoint **1200** and H.323 agent **1402** exchange CLOSE LOGICAL CHANNEL messages to close the logical channel between H.323 endpoint **1200** and MGCP device **1600.** In line 6 of the call flow diagram, MGCP agent **1602** transmits a MODIFY connection (MDCX) message to MGCP device **1600** indicating that the mode has been set to inactive. In lines 7 and 8 of the call flow diagram, H.323 endpoint **1200** and H.323 agent **1402** exchange the messaging required to close logical channel 2. H.323 agent **1402** interprets the inactive mode as a hold and applies H.323 third party calls and rerouting procedures to implement the hold actions. These procedures result in the closing of both unidirectional media streams between H.323 endpoint **1200** and MGCP device **1600.** In line 9 of the call flow diagram, H.323 agent **1402** transmits an AIP CPG message to MGCP agent **1602.** The CPG message includes the connection information parameter data structure. The channel operation field in the connection information data structure is set to mode change, and the mode field is set to inactive.

### H.323 - MGCP Retrieve Scenario

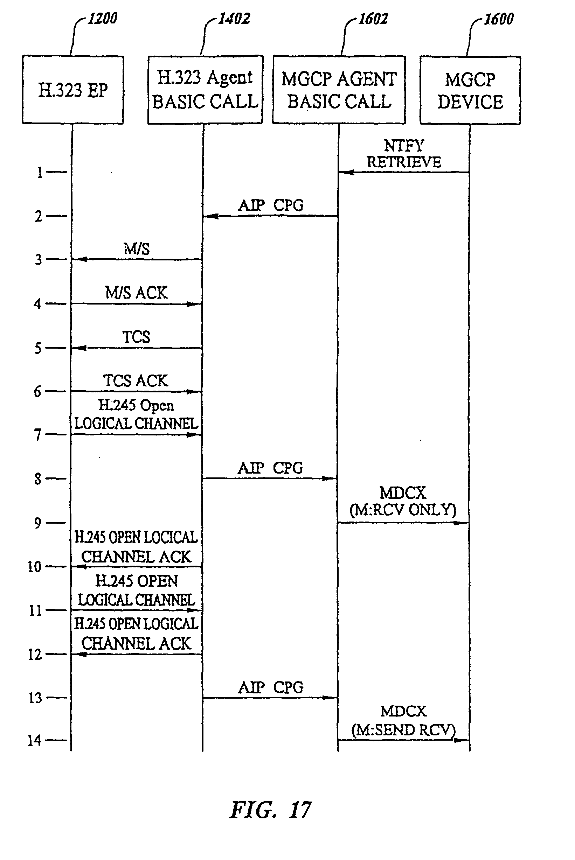

Figure 17 illustrates an H.323 - MGCP retrieve scenario. The entities illustrated in Figure 17 are the same as those illustrated in Figure 16, and hence a description thereof is not repeated herein. In Figure 17, it is assumed that a call between H.323 endpoint **1200** and MGCP device **1600** has been placed on hold.

In line 1 of the call flow diagram, MGCP device **1600** transmits a NOTIFY message to MGCP agent **1602.** The NOTIFY message contains an event that indicates to MGCP agent **1602** that the end user connected to MGCP device **1600** wishes to retrieve the call. In line 2 of the call flow diagram, MGCP agent **1602** transmits an AIP CPG message to H.323 agent **1402.** The AIP CPG message includes the connection information parameter data structure. The channel operation field in the data structure is set to mode change, and the mode field is set to send/receive.

In lines 3 and 4 of the call flow diagram, H.323 agent **1402** and H.323 endpoint **1200** make a master/slave determination. The H.323 devices must revert to a TCS exchange in order to reestablish the media streams. Accordingly, in lines 5 and 6 of the call flow diagram, H.323 agent **1402** and H.323 endpoint **1200** exchange terminal capabilities.

In line 7 of the call flow diagram, H.323 endpoint **1200** transmits an H.245 open logical channel message to H.323 agent **1402** to open one of the logical channels between H.323 endpoint **1200** and MGCP device **1600.** In line 8 of the call flow diagram, H.323 agent **1402** transmits an AIP CPG message to MGCP agent **1602.** The AIP CPG message includes the connection information parameter data structure. The change operation field in the data structure is set to mode change, and the mode field is set to send only. In line 9 of the call flow diagram, MGCP agent **1602** transmits a modify connection message to MGCP device **1600.** The modify connection message includes a mode field setting the mode to receive only. In line 10 of the call flow diagram H.323 agent **1402** acknowledges the H.245 open logical channel messages transmitted in line 7 of the call flow diagram.

In lines 11 and 12 of the call flow diagram, H.323 endpoint **1200** and H.323 agent **1402** exchange messaging for opening the other logical channel between H.323 endpoint and MGCP device **1600.** In line 13 of the call flow diagram, H.323 agent **1402** transmits an AIP CPG message to MGCP agent **1602.** The CPG message includes the connection information parameter data structure. The channel operation field in the data structure is set to mode change, and the mode field is set to send/receive. In line 14 of the call flow diagram, MGCP agent **1602** transmits a modify connection message to MGCP device **1600.** The modify connection message instructs the device to change the mode to send/receive. At this point, both media streams between H.323 endpoint **1200** and MGCP device **1600** are established.

### H.323 to MGCP Primary Rate Interface (PRI)

### Common Channel Signaling (CCS)

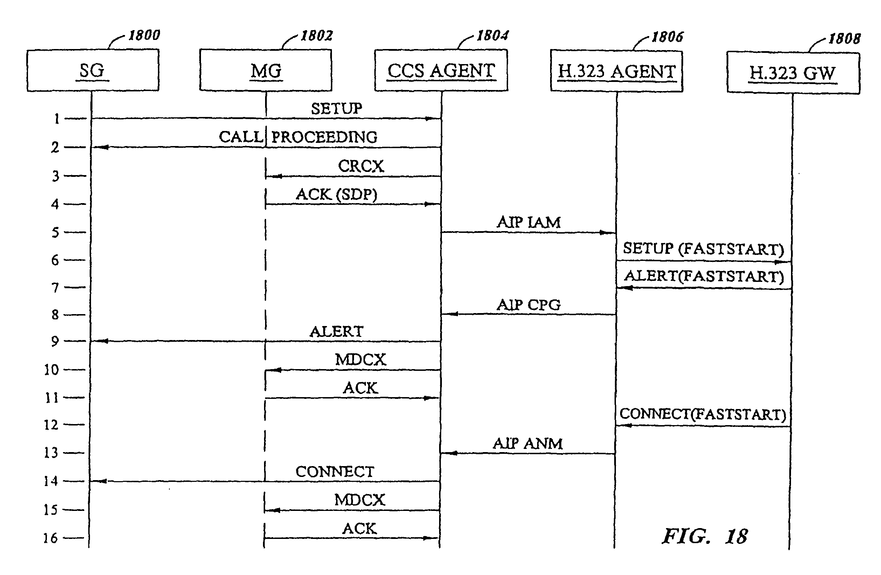

Figure 18 illustrates exemplary call signaling for H.323 to MGCP PRI (CCS). In Figure 18, signaling gateway **1800** relays call control signaling between a circuit-switched network and a packet-switched network. For example, signaling gateway **1800** may be connected to a PSTN end office on one side and to an IP network on the other side. In the illustrated embodiment, signaling gateway **1800** is configured to forward Q.931 call signaling messages from the PSTN network to a packet network and vice-versa. On the circuit-switched side, SG **1800** can be configured to send and receive Q.931 over Q.921 call signaling messages. On the packet-switched side, signaling gateway **1800** can be configured to send and receive Q.931 over ISDN User Adaptation over TCP/IP messages.

Media gateway **1802** converts between packets and circuits to communicate the media stream to and from a PSTN end user device. On the circuit-switched side, media gateway **1802** can send and receive the media stream using pulse code modulation (PCM) voice. On the packet-switched side, media gateway **1802** can send and receive the media stream using RTP over UDP/IP. In the illustrated embodiment, media gateway **1802** is controlled using MGCP.

CCS agent **1804** exchanges call control information with signaling gateway **1800** and media control information with media gateway **1802.** In the illustrated embodiment, CCS **1804** communicates with signaling gateway **1800** using Q.931 call signaling over IUA over TCP/IP and with media gateway **1802** using MGCP. CCS agent **1804** also communicates with H.323 agent **1806** using the agent interworking protocol, as described above. It is understood that CCS agent **1804** and H.323 agent **1806** can be part of a call server. H.323 agent **1806** and H.323 gateway **1808** exchange call signaling information according to ITU Recommendation H.225.

In line 1 of the call flow diagram, signaling gateway **1800** transmits a SETUP message to CCS agent **1804.** The SETUP message includes information, such as the dialed digits for creating a call with the called party. In line 2 of the call flow diagram CCS agent **1804** transmits a CALL PROCEEDING message to signaling gateway **1800** to indicate that CCS agent **1804** is attempting to establish a call with the called party. In line 3 of the call flow diagram, CCS agent **1804** sends an MGCP CREATE CONNECTION message to media gateway **1802.** In response to the CREATE CONNECTION message, media gateway **1802** transmits an ACKNOWLEDGE message including an SDP portion that specifies the supported media capabilities of media gateway **1802.** In line 5 of the call flow diagram, CCS agent **1804** transmits an AIP IAM message to H.323 agent **1806.** The AIP IAM message includes the connection information parameter that specifies the supported media capabilities of media gateway **1802.** In line 6 of the call flow diagram, H.323 agent **1806** transmits a SETUP message specifying the media capabilities of media gateway **1802** to H.323 to H.323 gateway **1808.** In line 7 of the call flow diagram, H.323 gateway agent **1808** transmits an ALERT message to H.323 agent **1806** indicating that the called part is being alerted of the incoming call. The ALERT message includes the supported media capabilities of H.323 gateway **1808.** In line 8 of the call flow diagram, H.323 agent **1806** sends an AIP CALL PROGRESS message including the connection information parameter specifying the media description of H.323 gateway **1808.** In line 9 of the call flow diagram, CCS agent **1804** transmits an ALERT message to signaling gateway **1800** indicating that the called party is being alerted.

In line 10 of the call flow diagram, CCS agent **1804** transmits an MGCP MODIFY CONNECTION message specifying the mode of the connection as receive only and including the media description of H.323 gateway **1808.** In line 11 of the call flow diagram, media gateway **1802** acknowledges the MODIFY CONNECTION message.

In line 12 of the call flow diagram, when the called party answers the call, H.323 gateway **1808** transmits a CONNECT message to H.323 agent **1806.** In line 13 of the call flow diagram, in response to receiving the CONNECT message, H.323 agent **1806** transmits an AIP ANSWER message to CCS agent **1804.** In line 14 of the call flow diagram, CCS agent **1804** transmits a CONNECT message to signaling gateway **1800** indicating that the call has been answered. In line 15 of the call flow diagram, CCS agent **1804** transmits a MODIFY CONNECTION message to media gateway **1802** opening the connection as send/receive. In line 16 of the call flow diagram, media gateway **1802** acknowledges the MODIFY CONNECTION message. At this point, a bi-directional media stream communication is established between the called and calling parties. Thus, the call flow diagram illustrated in Figure 18 embodies the true MGCP reference architecture whereby the SG and MG are separate entities.

### MGCP-H.323 Call Setup and Exchange of DTMF Digits

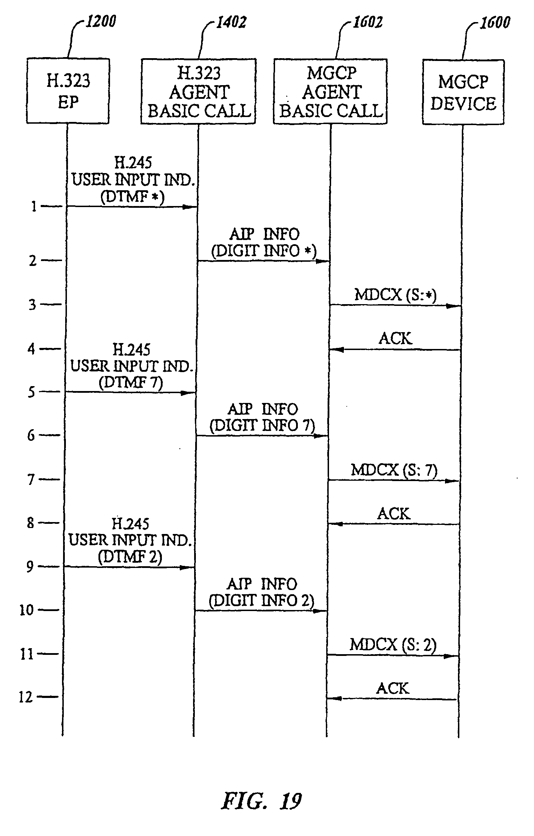

Figure 19 illustrates call signaling and exchange of DTMF digits between an MGCP gateway and an H.323 gateway. The entities illustrated in Figure 19 are the same as those illustrated in Figure 16. Hence, a description thereof is not repeated herein.

In Figure 19 it is assumed that a connection has already been established between H.323 endpoint **1200** and MGCP device **1600.** Therefore, call setup and teardown messages are not shown.

In line 1 of the call flow diagram, H.323 endpoint **1200** transmits a user input indication message to H.323 agent **1402** that includes the DTMF digit * encoded in the message. In line 2 of the call flow diagram, H.323 agent **1906** transmits an AIP_INFO message to MGCP agent **1602** that indicates that information is being communicated to MGCP agent **1602.** The AIP_INFO message includes the digit information parameter that specifies the DTMF digit entered by the end user connected to H.323 gateway **1902.** In line 3 of the call flow diagram, MGCP agent **1602** transmits a MODIFY CONNECTION message to MGCP device **1600.** The modify connection message includes a signal indicating the DTMF digit *. In line 4 of the call flow diagram, MGCP device **1600** acknowledges the modify connection message.

It will be understood that various details of the invention can be changed without departing from the scope of the invention. Furthermore, the foregoing description is for the purpose of illustration only, and not for the purpose of limitation-the invention being defined by the claims.

## Claims

1. A method for tunneling messages between protocol agents (302, 303), the method comprising receiving, from a first telephony device, a first message formatted according to a first IP telephony protocol:
(a) determining whether a parameter in the first message maps to a second protocol; and
(b) in response to determining that the parameter in the first message maps to the second protocol, formulating a second message formatted according to the second protocol **characterized by**:
(c) in response to determining that the parameter in the first message partially maps to the second protocol, formulating a multiprotocol message (ST5), the multiprotocol message including the first message formatted according to the first IP telephony protocol and a third message formatted to the second protocol.

2. A method according to Claim 1, comprising transmitting the multiprotocol message to a second protocol agent.

3. A method according to Claim 2, comprising in response to receiving the multiprotocol message, dividing the multiprotocol message into the first and the third messages.

4. A method according to Claim 3, comprising after dividing the multiprotocol message, determining whether processing of the first message is supported by the second protocol agent, and in response to determining that the processing of the first message is supported, processing the first message.

5. A method according to Claim 4, comprising processing the third message.

6. A method according to Claim 1, wherein the second message includes at least one of a media capabilities description and media stream management information derived from the first message;
transmitting the second message to a second protocol agent (303A); and
in response to receiving the second message, the second protocol agent generates a fourth message formatted according to a third IP telephony protocol for transmission to a second telephony device, the fourth message including the at least one of the media capabilities description and media stream management information derived from the second message.

7. A method according to Claim 6, wherein receiving a first message includes receiving a message formatted according to the media gateway control protocol (MGCP) or the session initiation protocol (SIP), and generating a fourth message includes generating a message formatted according to ITU Recommendation H.323.

8. A method according to Claim 6, wherein receiving a first message includes receiving a first message formatted according to ITU Recommendation H.323 and generating a fourth message includes generating a message formatted according to Bellcore Q.931, or media gateway control protocol (MGCP).

9. A method according to Claim 8, wherein receiving a message formulated to ITU Recommendation H.323 includes receiving a message containing H.323 fast start parameters, wherein formulating a second message includes mapping the H.323 fast start parameters to a media capabilities description in the second message, and generating the fourth message includes mapping the media capabilities description to MGCP.

10. A method according to any of Claims 6 to 9, wherein receiving a first message includes receiving a HOLD message from the first telephony device, formulating the second message includes generating a message including a connection information parameter having a mode change value for changing the mode of a media stream communication associated with the first telephony device, and wherein generating a fourth message includes generating a message for changing the mode of the media stream communication to inactive according to the third IP telephony protocol.

11. A method according to any of Claims 6 to 9, wherein receiving a first message includes receiving a RETRIEVE message from the first telephony device, and formulating the second message includes generating a message including a connection information parameter having a mode change value of active.

12. A method according to any of Claims 6 to 9, wherein receiving a first message includes receiving a message including at least one dual tone multifrequency (DTMF) digit value, formulating the second message includes mapping the DTMF digit value to a digit information parameter value in the second protocol, and generating the fourth message includes mapping the digit information parameter value to a DTMF digit value formatted according to the third IP telephony protocol.

13. A method according to any of Claims 6 to 12, comprising transmitting the fourth message to a second telephony device configured to communicate accordingly to the third IP telephony protocol.

## Patentansprüche

1. Verfahren zum Tunneln von Nachrichten zwischen Protokoll-Agenten (302, 303), wobei das Verfahren den Empfang einer ersten Nachricht, die entsprechend einem ersten IP-Telefonie-Protokoll formatiert ist, von einem ersten Telefonie-Gerät umfasst:
(a) Feststellen, ob ein Parameter in der ersten Nachricht auf ein zweites Protokoll umsetzbar ist; und
(b) als Antwort auf die Feststellung, dass der Parameter in der ersten Nachricht auf das zweite Protokoll umsetzbar ist, Formulieren einer zweiten Nachricht, die entsprechend dem zweiten Protokoll formatiert ist, **gekennzeichnet durch**:
(c) als Antwort auf die Feststellung, dass der Parameter in der ersten Nachricht teilweise auf das zweite Protokoll umsetzbar ist, Formulieren einer Multiprotokoll-Nachricht (ST5), wobei die Multiprotokoll-Nachricht die erste entsprechend dem ersten IP-Telefonie-Protokoll formatierte Nachricht und eine dritte Nachricht einschließt, die entsprechend dem zweiten Protokoll formatiert ist.

2. Verfahren nach Anspruch 1, das das Senden der Multiprotokoll-Nachricht an einen zweiten Protokoll-Agenten umfasst.

3. Verfahren nach Anspruch 2, das als Antwort auf den Empfang der Multiprotokoll-Nachricht die Aufteilung der Multiprotokoll-Nachricht in die ersten und die dritten Nachrichten umfasst.

4. Verfahren nach Anspruch 3, das nach dem Aufteilen der Multiprotokoll-Nachricht die Feststellung, ob die Verarbeitung der ersten Nachricht durch den zweiten Protokoll-Agenten unterstützt wird, und als Antwort auf die Feststellung, dass die Verarbeitung der ersten Nachricht unterstützt wird, die Verarbeitung der ersten Nachricht umfasst.

5. Verfahren nach Anspruch 4, das die Verarbeitung der dritten Nachricht umfasst.

6. Verfahren nach Anspruch 1, bei dem die zweite Nachricht zumindest eine einer Medien-Fähigkeiten-Beschreibung und einer Medienstrom-Verwaltungs-Information einschließt, die aus der ersten Nachricht abgeleitet ist;
Senden der zweiten Nachricht an einen zweiten Protokoll-Agenten (303A); und
wobei als Antwort auf den Empfang der zweiten Nachricht der zweite Protokoll-Agent eine entsprechend einem dritten IP-Telefonie-Protokoll formatierte vierte Nachricht zur Aussendung an ein zweites Telefonie-Gerät erzeugt, wobei die vierte Nachricht die zumindest eine der Medien-Fähigkeiten-Beschreibung und der Medienstrom-Verwaltungs-Information einschließt, die aus der zweiten Nachricht abgeleitet ist.

7. Verfahren nach Anspruch 6, bei dem der Empfang einer ersten Nachricht den Empfang einer Nachricht einschließt, die entsprechend dem Medien-Überleiteinrichtungs-Steuerprotokoll (MGCP) oder dem Sitzungs-Initialisierungs-Protokoll (SIP) formatiert ist, und die Erzeugung einer vierten Nachricht die Erzeugung einer Nachricht einschließt, die entsprechend der ITU-Empfehlung H.323 formatiert ist.

8. Verfahren nach Anspruch 6, bei dem der Empfang einer ersten Nachricht den Empfang einer gemäß der ITU-Empfehlung H.323 formatierten ersten Nachricht einschließt, und die Erzeugung einer vierten Nachricht die Erzeugung einer Nachricht einschließt, die gemäß dem Bellcore Q.931- oder Medien-Überleiteinrichtungs-Steuerprotokoll (MGCP) formatiert ist.

9. Verfahren nach Anspruch 8, bei dem der Empfang einer gemäß der ITU-Empfehlung H.323 formatierten Nachricht den Empfang einer Nachricht einschließt, die H.323-Schnellstart-Parameter enthält, wobei die Formatierung einer zweiten Nachricht die Umsetzung der H.323-Schnellstart-Parameter auf eine Medien-Fähigkeiten-Beschreibung in der zweiten Nachricht einschließt, und die Erzeugung der vierten Nachricht die Umsetzung der Medien-Fähigkeiten-Beschreibung auf MGCP einschließt.

10. Verfahren nach einem der Ansprüche 6 bis 9, bei dem der Empfang einer ersten Nachricht den Empfang einer HALTE-Nachricht von dem ersten Telefonie-Gerät einschließt, die Formulierung der zweiten Nachricht die Erzeugung einer Nachricht einschließt, die einen Verbindungs-Informations-Parameter einschließt, der einen Betriebsart-Änderungs-Wert zum Ändern der Betriebsart einer Medienstrom-Kommunikation aufweist, die dem ersten Telefonie-Gerät zugeordnet ist, und bei dem die Erzeugung einer vierten Nachricht die Erzeugung einer Nachricht zum Ändern der Betriebsart der Medienstrom-Kommunikation auf inaktiv gemäß dem dritten IP-Telefonie-Protokoll einschließt.

11. Verfahren nach einem der Ansprüche 6 bis 9, bei dem der Empfang einer ersten Nachricht den Empfang einer RÜCKGEWINNUNGS-Nachricht von dem ersten Telefonie-Gerät einschließt, und die Formulierung der zweiten Nachricht die Erzeugung einer Nachricht einschließt, die einen Verbindungs-Informations-Parameter einschließt, der einen Betriebsart-Änderungs-Wert von aktiv hat.

12. Verfahren nach einen der Ansprüche 6 bis 9, bei dem der Empfang einer ersten Nachricht den Empfang einer Nachricht einschließt, die zumindest einen Wahlton-Mehrfrequenz- (DTMF-) Ziffern-Wert einschließt, die Formulierung der zweiten Nachricht die Umsetzung des DTMF-Ziffern-Wertes auf einen Ziffern-Informations-Parameter-Wert in dem zweiten Protokoll einschließt, und die Erzeugung der vierten Nachricht die Umsetzung des Ziffern-Informations-Parameter-Wertes auf einen DTMF-Ziffern-Wert einschließt, der entsprechend dem dritten IP-Telefonie-Protokoll formatiert ist.

13. Verfahren nach einem der Ansprüche 6 bis 12, das das Senden der vierten Nachricht an ein zweites Telefonie-Gerät umfasst, das zur Kommunikation gemäß dem dritten IP-Telefonie-Protokoll konfiguriert ist.

## Revendications

1. Procédé pour la tunellisation de messages entre des agents de protocole (302, 303), le procédé comprenant la réception, d'un premier dispositif de téléphonie, d'un premier message formaté selon un premier protocole de téléphonie IP :
(a) déterminer si un paramètre dans le premier message mappe sur un deuxième protocole ; et
(b) en réponse à la détermination que le paramètre dans le premier message mappe sur le deuxième protocole, formuler un deuxième message formaté selon le deuxième protocole **caractérisé par** :
(c) en réponse à la détermination que le paramètre dans le premier message mappe partiellement sur le deuxième protocole, formuler un message multiprotocole (ST5), le message multiprotocole comprenant le premier message formaté selon le premier protocole de téléphonie IP et un troisième message formaté sur le deuxième protocole.

2. Procédé selon la revendication 1, comprenant la transmission du message multiprotocole à un deuxième agent de protocole.

3. Procédé selon la revendication 2, comprenant en réponse à la réception du message multiprotocole, la division du message multiprotocole en le premier et le troisième messages.

4. Procédé selon la revendication 3, comprenant après la division du message multiprotocole, la détermination si le traitement du premier message est supporté par le deuxième agent de protocole, et en réponse à la détermination que le traitement du premier message est supporté, le traitement du premier message.

5. Procédé selon la revendication 4, comprenant le traitement du troisième message.

6. Procédé selon la revendication 1, dans lequel le deuxième message comprend au moins une parmi une description de capacités multimédia et des informations de gestion de transmission multimédia en continu provenant du premier message ;
transmettre le deuxième message à un deuxième agent de protocole (303A) ; et
en réponse à la réception du deuxième message, le deuxième agent de protocole génère un quatrième message formaté selon un troisième protocole de téléphonie IP pour la transmission à un deuxième dispositif de téléphonie, le quatrième message comprenant l'au moins une parmi la description des capacités multimédia et des informations de gestion de transmission multimédia en continu provenant du deuxième message.

7. Procédé selon la revendication 6, dans lequel la réception d'un premier message comprend la réception d'un message formaté selon le protocole de contrôle de passerelle de média (MGCP) ou le protocole d'ouverture de session (SIP), et la génération d'un quatrième message comprend la génération d'un message formaté selon la recommandation ITU H.323.

8. Procédé selon la revendication 6, dans lequel la réception d'un premier message comprend la réception d'un premier message formaté selon la recommandation ITU H.323 et la génération d'un quatrième message comprend la génération d'un message formaté selon Bellcore Q.931, ou le protocole de contrôle de passerelle média (MGCP).

9. Procédé selon la revendication 8, dans lequel la réception d'un message formulé à la recommandation ITU H.323 comprend la réception d'un message contenant les paramètres de démarrage rapide H.323, dans lequel la formulation d'un deuxième message comprend le mappage des paramètres de démarrage rapide H.323 sur une description de capacités multimédia dans le deuxième message, et la génération du quatrième message comprend le mappage de la description des capacités multimédia sur le MGCP.

10. Procédé selon l'une quelconque des revendications 6 à 9, dans lequel la réception d'un premier message comprend la réception d'un message DE MAINTIEN du premier dispositif de téléphonie, la formulation du deuxième message comprend la génération d'un message comprenant un paramètre d'informations de connexion ayant une valeur de changement de mode pour changer le mode d'une communication de transmission multimédia en continu associée au premier dispositif de téléphonie, et dans lequel la génération d'un quatrième message comprend la génération d'un message pour changer le mode de la communication de transmission multimédia en continu en mode inactif selon le troisième protocole de téléphonie IP.

11. Procédé selon l'une quelconque des revendications 6 à 9, dans lequel la réception d'un premier message comprend la réception d'un message DE RECUPERATION du premier dispositif de téléphonie, et la formulation du deuxième message comprend la génération d'un message comprenant un paramètre d'informations de connexion ayant une valeur de changement de mode actif.

12. Procédé selon l'une quelconque des revendications 6 à 9, dans lequel la réception d'un premier message comprend la réception d'un message comprenant au moins une valeur numérique de multifréquence à deux tonalités (DTMF), la formulation du deuxième message comprend le mappage de la valeur numérique DTMF sur une valeur de paramètre d'informations numérique dans le deuxième protocole, et la génération du quatrième message comprend le mappage de la valeur de paramètre d'informations numérique sur une valeur numérique DTMF formatée selon le troisième protocole de téléphonie IP.

13. Procédé selon l'une quelconque des revendications 6 à 12, comprenant la transmission du quatrième message à un deuxième dispositif de téléphonie configuré pour communiquer en conséquence avec le troisième protocole de téléphonie IP.
